# EUROPEAN PATENT APPLICATION

(11) **EP 4 579 899 A1**
(43) Date of publication of application: **02.07.2025**
(21) Application number: 22962332.7
(22) Date of filing: 18.10.2022
(51) Int. Cl.: H01M 50/152, H01M 50/166

(54) **END CAP, BATTERY CELL, BATTERY, AND ELECTRICAL DEVICE**

(71) Applicant: Contemporary Amperex Technology Co., Limited, Ningde, Fujian 352100 (CN)
(72) Inventor: CHEN, Shengwang, Ningde, Fujian 352100 (CN); GUO, Zhijun, Ningde, Fujian 352100 (CN); WANG, Peng, Ningde, Fujian 352100 (CN)
(74) Representative: Gong, Jinping
(86) International application number: PCT/CN2022/125960
(87) International publication number: WO 2024/082140

(57) **Abstract**

The embodiments of the present disclosure provide an end cover, battery cell, battery and electrical device, which belong to the field of battery technology. An end cover is configured to close an opening of housing of battery cell, wherein the end cover includes an abutting portion and a first convex portion. The abutting portion includes an abutting surface, wherein the abutting surface is configured to abut against one end of the housing provided with the opening. The first convex portion is connected to the abutting portion and protrudes from the abutting surface. The first convex portion is configured to extend into the housing. The groove is arranged on the abutting surface, and the groove is arranged around the first convex portion. An external peripheral surface of the first convex portion is connected to the abutting surface through the groove wall surface of the groove, which reduces the risk that the rounded corner is formed at the connection position of the external peripheral surface of first convex portion and the abutting surface to cause the interference between the end cover and the housing, so that the abutting surface can abut against one end of the housing provided with the opening, thereby improving the firmness between the end cover and the housing after connected.

## Description

### Technical Field

The present disclosure relates to the technical field of battery, and specifically relates to an end cover, battery cell, battery and electrical device.

### Background Art

The Battery is widely used in electronic devices such as cell phone, laptop computer, electric bicycle, electric car, electric airplane, electric boat, electric toy car, electric toy boat, electric toy airplane and electric tool, etc.

In the battery cell, an end cover is connected to a housing and closes an opening of the housing. A space for accommodating electrode assemblies, electrolyte and other components is formed by the end cover and the housing. In order to ensure a service life of the battery cell, it is necessary to ensure the firmness between the end cover and the housing after connected. Therefore, how to improve the firmness between the end cover and the housing after connected is a technical problem that needs to be solved urgently.

### Summary

The Embodiments of the present disclosure provide an end cover, battery cell, battery and electrical device, which can improve the firmness between the end cover and the housing after connected.

In a first aspect, the embodiments of the present disclosure provide an end cover, which is configured to close an opening of housing of battery cell, wherein the end cover includes a abutting portion and a first convex portion; the abutting portion is provided with an abutting surface, wherein the abutting surface is configured to abut against one end of the housing provided with the opening; the first convex portion is connected to the abutting portion and protrudes out of the abutting surface, and the first convex portion is configured to extend into the housing; and a groove is arranged on the abutting surface, the groove is arranged around the first convex portion, and an external peripheral surface of the first convex portion is connected to the abutting surface through a groove wall surface of groove.

In the above technical solution, the groove is arranged on the abutting surface and the external peripheral surface of the first convex portion is connected to the abutting surface through the groove wall surface of the groove, which reduces a risk that the rounded corner is formed at a connection position of the external peripheral surface of the first convex portion and the abutting surface to cause an interference between the end cover and the housing, so that the abutting surface can abut against one end of the housing with the opening, thereby improving the firmness of the end cover after connected to the housing.

In some embodiments, the groove wall surface includes a first groove side surface, wherein the first groove side surface is connected to the abutting surface, and the first groove side surface is arranged with the abutting surface at an obtuse angle, which increases the amount of extruding material when stamping and molding. An extrusion pressure on the first groove side surface during stamping and molding can improve a perpendicularity between the abutting surface and the external side surface of the abutting portion, and the abutting surface can be more even, so as to increase a contact area between the abutting surface and the housing, which facilitates a welding of the abutting portion and the housing.

In some embodiments, the groove wall surface includes a second groove side surface and a first rounded surface; the second groove side surface is connected to the external peripheral surface; and the first rounded surface is connected to the first groove side surface and the second groove side surface. The first rounded surface can realize a smooth transition between the first groove side surface and the second groove side surface, which is less likely to cause a stress concentration, and improves the strength at the connection area of the first groove side surface and the second groove side surface in the end cover.

In some embodiments, the groove side surface includes a second groove side surface, a groove bottom surface, and the first rounded surface; the second groove side surface is connected to the external peripheral surface; the groove bottom surface is connected to the first groove side surface; and the first rounded surface is connected the second groove side surface and the groove bottom surface. The first rounded surface can realize a circular transition between the second groove side surface and the groove bottom surface, which is less likely to cause a stress concentration, and improves the strength at the connection area of the second groove side surface and the groove bottom surface in the end cover. Additionally, since the first groove side surface connected to the groove bottom surface is arranged to the abutting surface at the obtuse angle, the groove of this structure has a larger groove width, which reduces a width of the abutting surface, so that the abutting surface can be in better contact with the housing.

In some embodiments, the groove bottom surface is parallel to the abutting surface.

In some embodiments, the first rounded surface has a radius R, satisfying: R≥0.2mm. The difficulty of molding the first rounded surface is reduced while reducing the risk of stress concentration for the end cover.

In some embodiments, along a direction perpendicular to the abutting surface, a distance from a position where the second groove side surface is connected to the first rounded surface to the abutting surface is H, satisfying: H ≥ 0.05mm. The risk that the first rounded surface abuts against the end of the housing provided with the opening is reduced.

In some embodiments, the second groove side surface and the external peripheral surface are arranged on the same cylindrical surface, so that the structure of the groove is simpler, thereby reducing the difficulty of molding the groove.

In some embodiments, the external peripheral surface extends along a direction perpendicular to the abutting surface. When the outer external peripheral surface of first convex portion is coordinated with the inner peripheral surface of housing, the contact area between the abutting surface and the housing can be increased.

In some embodiments, an end surface departing from the abutting surface is arranged on the first convex portion, wherein the end surface is connected to the external peripheral surface through a second rounded surface. For arrangement of the second rounded surface, on the one hand, it avoids to form a sharp corner at the position where the end surface of the first convex portion is connected to the external peripheral surface; on the other hand, it facilitates the first convex portion to enter the housing when the end cover is assembled with the housing.

In some embodiments, the end cover further includes a body portion. The first convex portion is arranged around external side of the body portion. In a thickness direction of the body portion, the first convex portion protrudes from the body portion along a direction facing the inside of the housing. The first convex portion can reinforce the body portion and improve a deformation resistance of the body portion.

In some embodiments, along the thickness direction of the body portion, a first external surface departing from the housing is arranged on the body portion, wherein the first external surface is a surface of the end cover furthest away from the housing. The second external surface disposed oppositely to the abutting surface is arranged on the abutting portion, and the first external surface is further away from the abutting surface than the second external surface. The first external surface can be configured as a supporting surface of the battery cell. Because the first external surface is further away from the abutting surface than the second external surface, even if a welding slag protruding from the supporting surface is welded by the abutting portion and housing, the welding slag is not easy to protruded from the first external surface, which reduces the effect of the welding slag on the first external surface, so that the first external surface can be in contact with the external components by a larger area when the battery cell is placed on the external components, thereby improving the stability of the battery cell.

In some embodiments, a weak portion is arranged on the body portion, wherein the weak portion is configured to be destroyed when the battery cell relieves pressure, so as to relieve pressure in the battery cell. The end cover is provided with a pressure relief function by the arrangement of the weak portion, so that the end cover can be configured as a pressure relief component of the battery cell to improve the safety of the battery cell.

In some embodiments, a notch groove is arranged on the body portion, wherein the weak portion is arranged at a position where the body portion is corresponding to the notch groove. The weak portion is formed by correspondingly arranging the notch groove on the body portion, so that the thickness of the weak portion is thinner than the thickness of the other areas, which is easier to be destroyed. The molding way of the weak portion is simpler.

In some embodiments, a pressure relief region bounded by the notch groove is arranged on the body portion, wherein a reinforcement is arranged on the pressure relief region. When relieving pressure, the pressure relief region can be opened with the boundary of the notch groove, so that the end cover has a larger pressure relief area. The reinforcement is arranged on the pressure relief region, so that the reinforcement can reinforce the pressure relief region and improve the deformation resistance of the pressure relief region. Therefore, when the internal pressure of the battery cell changes, the pressure relief region is not easy to be deformed, which reduces the risk that the pressure relief region is opened in the normal use of the battery cell.

In some embodiments, the reinforcement includes a first reinforcing portion and a second reinforcing portion, wherein the first reinforcing portion and the second reinforcing portion both are in arc, and an opening of the first reinforcing portion is arranged facing away from an opening of the second reinforcing portion. The reinforcement of this structure has a larger radiation range, which can increase the reinforcing range of the pressure relief region. The first reinforcing portion and the second reinforcing portion of arc have better deformation resistance, which can reinforce the pressure relief region better, and further improve the deformation resistance and fatigue resistance of the pressure relief region.

In some embodiments, the notch groove is a groove extending along a closed trajectory. When the battery cell relieves the pressure, the portion of the body portion in the region defined by the notch groove can be opened in a manner that is detached towards the outside of the battery cell, so that the battery cell has a larger pressure relief area, thereby improving the pressure relief efficiency.

In some embodiments, the notch groove is a circular groove, which has a simple structure and is easy to be molded.

In some embodiments, along the thickness direction of the body portion, a first external surface departing from the interior of the housing is arranged on the body portion, wherein the first external surface is a surface of the end cover furthest away from the housing. A concave portion is arranged on the first external surface, and a projection of bottom surface of the concave portion covers the weak portion. Through the arrangement of concave portion, a certain distance exists between the weak portion and the first external surface. When the first external surface is in contact with the external components, it can reduce the influence of the external components on the weak portion, so that the weak portion can be destroyed smoothly when the internal pressure of the battery cell reaches the normal burst pressure, thereby reducing the risk that the weak portion causes an increase of the burst pressure of battery cell because of the inhibitory effect from external components.

In some embodiments, along the thickness direction of the body portion, a first inner surface opposite the first external surface is arranged on the body portion, and a second convex portion is arranged at a position where the first inner surface is corresponding to the concave portion. The arrangement of the second convex portion can increase the strength of the region of the concave portion that is arranged on the body portion.

In a second aspect, the embodiments of the present disclosure provide a battery cell, which includes the housing and the end cover provided by any of the embodiments of the first aspect above; the housing has an opening; the first convex portion extends into the housing, and the abutting surface abuts against one end of the housing provided with the opening, and the end cover closes the opening.

In some embodiments, the abutting portion is welded to the housing, so that the way of fixed connection between the end cover and the housing is simple, which can ensure the firmness and sealing property of the end cover and the housing after connected.

In a third aspect, the embodiments of the present disclosure provide a battery, which includes the battery cell provided by any of the embodiments of the second aspect above.

In a fourth aspect, the embodiments of the present disclosure provide an electrical device, which includes the battery provided by any of the embodiments of the third aspect above.

### Brief Description of Drawings

In order to more clearly illustrate the technical solutions of the embodiments of the present disclosure, the drawings to be used in the embodiments will be briefly introduced below. It should be understood that the following drawings only show certain embodiments of the present disclosure, and therefore should not be regarded as a limitation of the scope. For persons of ordinary skill in the art, other relevant drawings can be obtained from these drawings without creative labors.
FIG. 1 shows a structure schematic diagram of a vehicle provided by some embodiments of the present disclosure;
FIG. 2 shows an explosion diagram of a battery provided by some embodiments of the present disclosure;
FIG. 3 shows an explosion diagram of a battery cell provided by some embodiments of the present disclosure;
FIG. 4 shows a structure schematic diagram of a battery cell shown in FIG. 3;
FIG. 5 shows a structure schematic diagram of an end cover shown in FIG. 4;
FIG. 6 shows a partially enlarged diagram at A of an end cover shown in FIG. 5;
FIG. 7 shows a partially enlarged diagram at B of an end cover shown in FIG. 6;
FIG. 8 shows a partially enlarged diagram of an end cover provided by some other embodiments of the present disclosure;
FIG. 9 shows a structure schematic diagram of a battery cell provided by some other embodiments of the present disclosure;
FIG. 10 shows a structure schematic diagram of an end cover shown in FIG. 9;
FIG. 11 shows a partially enlarged diagram at C of an end cover shown in FIG. 10;
FIG. 12 shows an axonometric diagram of an end cover shown in FIG. 10; and
FIG. 13 shows a top view of an end cover shown in FIG. 12.

Reference numbers: 1-housing; 2-electrode assembly; 21-first tab; 22-second tab; 3-end cover; 31-abutting portion; 311-abutting surface; 312-external side surface; 313-second external surface; 32-first convex portion; 321-external peripheral surface; 322-end surface; 323-second rounded surface; 33-groove; 331-first groove side surface; 332-second groove side surface; 333-first rounded surface; 334-groove bottom surface; 34-body portion; 341-first external surface; 342-weak portion; 343-notch groove; 344-pressure relief region; 345-reinforcement; 3451-first reinforcing portion; 3452-second reinforcing portion; 346-concave portion; 347-first inner surface; 348-second convex portion; 4-electrode terminal; 5-current collecting member; 10-battery cell; 20-box body; 201-first portion; 202-second portion; 100-battery; 200-controller; 300-motor; 1000-vehicle.

### Detailed Description of Embodiments

In In order to make the purpose, technical solutions and advantages of the embodiments of the present disclosure clearer, the technical solutions in the embodiments of the present disclosure will be clearly described below in conjunction with drawings in the embodiments of the present disclosure. It is clear that the described embodiments are partially embodiments of the present disclosure, and not all of the embodiments. Based on the embodiments of the present disclosure, all other embodiments obtained by those ordinarily skilled in the art without creative labors, shall fall within the scope of protection of the present disclosure.

Unless otherwise defined, all technical and scientific terms used in the present disclosure have the same meaning as commonly understood by those skilled in the art belonging to the present disclosure. The terms used in specification of the present disclosure are used only for the purpose of describing specific embodiments, and are not intended to limit the present disclosure. The terms "include" and "have," and any variations thereof in the specification of the present disclosure and claims and in the foregoing description of drawings, are intended to cover non-exclusive containing. The terms, such as "first", "second", etc. in the specification and claims of the present disclosure, or in the drawings described above are used to distinguish between different objects, and are not used to describe a particular order or relationship of priority.

Reference to "embodiment" in the present disclosure means that particular features, structures, or characteristics described in conjunction with the embodiments can be included in at least one embodiment of the present disclosure. The phrase occurs at various positions of the specification does not necessarily all refer to the same embodiment, nor is it a separate or alternative embodiment that is mutually exclusive with other embodiments.

The term "and/or" in the present disclosure is merely an association relationship for describing associated objects, indicating that three relationships can exist, for example, A and/or B can be indicated that: three cases of A alone, both A and B, and B alone. Additionally, the character "/" in the present disclosure generally indicates an "or" relationship between the contextual objects.

In embodiments of the present disclosure, the same reference numbers indicate the same components. For sake of brevity, the detailed descriptions for same components in different embodiments are omitted. It should be understood that, as shown in the drawings, the thickness, length, width and other dimensions of the various components in the embodiments of the present disclosure, as well as the overall thickness, length, width, other dimensions of the integrated device are illustrative only, and should not be any limitation of the present disclosure.

As used in the present disclosure, the "plurality" means more than two (including two).

In the present disclosure, the battery cell can include a lithium-ion secondary battery, a lithium-ion primary battery, a lithium-sulfur battery, a sodium-lithium-ion battery, a sodium-ion battery or a magnesium-ion battery, etc., which is not limited by the embodiments of the present disclosure. The battery cell can be cylindrical, flat, rectangular or other shapes, etc., which is not limited by the embodiments of the present disclosure. The battery cells are generally divided into three types according to packaging method: cylindrical battery cell, square battery cell and soft pack battery cell, which is not limited by the embodiments of the present disclosure.

The battery referred in embodiments of the present disclosure refers to a single physical module including one or more battery cells, so as to provide a higher voltage and capacity. For example, the battery referred in the present disclosure can include battery module or battery pack, etc. The battery generally includes a box body for packaging one or more battery cells. The box body can prevent liquid or other foreign objects from affecting the charging or discharging of the battery cell.

The battery cell includes electrode assembly and electrolyte, and the electrode assembly is consisted of positive electrode plate, negative electrode plate and isolation diaphragm. The battery cell works primarily on metal ions moving between the positive electrode plate and negative electrode plate. The positive electrode plate includes a positive electrode collector and a positive electrode active substance layer, wherein the positive electrode active substance layer is coated on a surface of the positive electrode collector. The positive electrode collector not coated with the positive electrode active substance layer protrudes out of the positive electrode collector coated with the positive electrode active substance layer, and the positive electrode collector not coated with the positive electrode active substance layer is configured as a positive tab. In case of lithium-ion battery, materials of the positive electrode collector can be aluminum, and the positive electrode active substance can be lithium cobalt oxide, lithium iron phosphate, ternary lithium or lithium manganate, etc. The negative electrode includes a negative electrode collector and a negative electrode active substance layer, wherein the negative electrode active substance layer is coated on a surface of the negative electrode collector. The negative electrode collector not coated with the negative electrode active substance layer protrudes out of the negative electrode collector coated with the negative electrode active substance layer, and the negative electrode collector not coated with the negative electrode active substance layer is configured as a negative tab. The material of the negative electrode collector can be copper, and the negative electrode active substance can be carbon or silicon, etc. In order to ensure that a heavy current is passed without fusing, a plurality of positive tabs are provided and laminated together, and a plurality of negative tabs are provided and laminated together. The material of the isolation diaphragm can be PP (polypropylene) or PE (polyethylene), etc. Additionally, the electrode assembly can be a coiled structure or a laminated structure, and the embodiments of the present disclosure are not limited thereto.

In the battery cell, the end cover is connected to the housing and configured to close the opening of housing. The space for accommodating electrode assembly electrolyte and other components is formed by the end cover and the housing together. The inventor noticed that, the end cover and the housing are easy to become loose after connected, so that the firmness of the end cover and the housing is poor after connected.

For a general end cover, the end cover is provided with the abutting portion and the first convex portion. The first convex portion extends into the housing when the end cover is mounted, and the abutting surface of the abutting portion abuts against one end of the housing provided with the opening. The inventor noticed that, the abutting surface of the abutting portion is generally transitioned to the external peripheral surface of the first convex portion by the rounded corner. The rounded corner will interfere with the housing when the end cover is mounted, so that the abutting surface cannot abut against the end of the housing provided with the opening, and the firmness of the end cover and the housing is poor after connected.

In view of this, the embodiments of the present disclosure provide an end cover, wherein a groove surrounding the first convex portion is arranged on the abutting surface of the abutting portion, and the outer external peripheral surface of the first convex portion is connected to the abutting surface through the groove wall surface of the groove.

In such the end cover, the groove is arranged on the abutting surface and the external peripheral surface of the first convex portion is connected to the abutting surface through the groove wall surface of the groove, which reduces the risk that the rounded corner is formed at the connection position of the external peripheral surface of first convex portion and the abutting surface to cause the interference between the end cover and the housing, so that the abutting surface can abut against one end of the housing provided with the opening, thereby improving the firmness of the end cover after connected to the housing.

The end cover described in embodiments of the present disclosure is applied to the battery cell, the battery and the electrical device.

The electrical device can be vehicle, cell phone, portable device, laptop, ship, spacecraft, electric toy and electric tool, etc. The vehicle can be fuel vehicle, gas vehicle or new energy vehicle, wherein the new energy vehicle can be pure electric vehicle, hybrid electric vehicle or range extended vehicle, etc. The spacecraft includes airplane, rocket, space shuttle and spaceship, etc. The electric toy includes stationary or movable electric toy, such as game console, electric car toy, electric boat toy and electric airplane toy, etc. The electric tool includes metal cutting electric tool, grinding electric tool, assembling electric tool and electric tool for railroad, such as electric drill, electric sander, electric wrench, electric screwdriver, electric hammer, electric drill, concrete vibrator and electric planer, etc. The embodiments of the present disclosure do not provide any special limitations for the electrical devices.

For illustrative purpose, the following embodiments take the electrical device as a vehicle for example.

The end cover 3 described in embodiments of the present disclosure is applied to the battery cell 10, the battery 100 and the electrical device using the battery 100.

The electrical device can be vehicle 1000, cell phone, portable device, laptop, ship, spacecraft, electric toy and electric tool, etc. The vehicle 1000 can be fuel vehicle, gas vehicle or new energy vehicle, wherein the new energy vehicle can be pure electric vehicle, hybrid electric vehicle or range extended vehicle, etc. The spacecraft includes airplane, rocket, space shuttle and spaceship, etc. The electric toy includes stationary or movable electric toy, such as game console, electric car toy, electric boat toy and electric airplane toy, etc. The electric tool includes metal cutting electric tool, grinding electric tool, assembling electric tool and electric tool for railroad, such as electric drill, electric sander, electric wrench, electric screwdriver, electric hammer, electric drill, concrete vibrator and electric planer, etc. The embodiments of the present disclosure do not provide any special limitations for the electrical devices.

For illustrative purpose, the following embodiments take the electrical device as a vehicle 1000 for example.

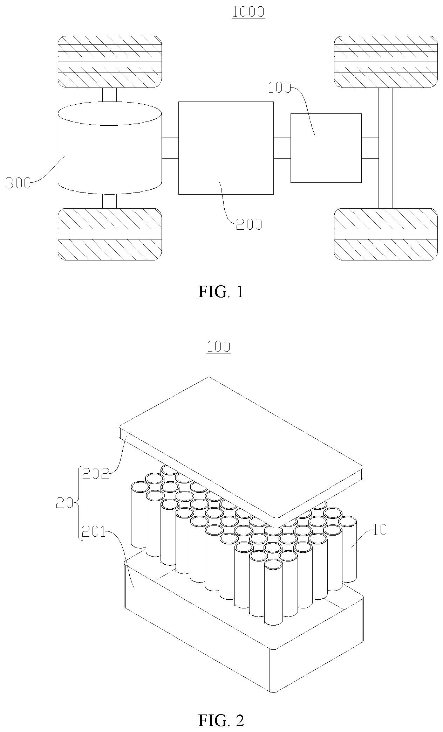

Referring to FIG. 1, FIG. 1 shows the structure schematic diagram of the vehicle 1000 provided by some embodiments of the present disclosure. The battery 100 is arranged at interior of the vehicle 1000, and the battery 100 can be arranged at bottom or head or tail of the vehicle 1000. The battery 100 can be configured to supply power for the vehicle 1000, e.g., the battery 100 can be configured as an operating power supply for the vehicle 1000.

The vehicle 1000 can further include a controller 200 and a motor 300, wherein the controller 200 is configured to control the battery 100 to supply power to the motor 300, for example, configured to electrical needs of the vehicle 1000 at work when starting, navigating, and travelling.

In some embodiments of the present disclosure, the battery 100 can not only be configured as the operating power supply for the vehicle 1000, but can also be configured as a driving power supply for the vehicle 1000, which replaces or partially replaces fuel oil or natural gas to provide driving power for the vehicle 1000.

Referring to FIG. 2, FIG. 2 shows the explosion diagram of the battery 100 provided by some embodiments of the present disclosure. The battery 100 includes the battery cell 10 and a box body 20, wherein the box body 20 is configured to accommodate the battery cell 10.

The box body 20 is a component for accommodating the battery cell 10, wherein the box body 20 provides an accommodating space for the battery cell 10, and the box body 20 can be composed of a variety of structures. In some embodiments, the box body 20 can include a first portion 201 and a second portion 202, wherein the first portion 201 and the second portion 202 cover each other to define an accommodating space for accommodating the battery cell 10. The first portion 201 and the second portion 202 can be multiple shapes, such as rectangular, cylinder, etc. The first portion 201 can be a hollow structure opening on one side, and the second portion 202 can also be a hollow structure opening on one side. The opening side of the second portion 202 is covered on the opening side of the first portion 201, so that the box body 20 with accommodating space is formed. It can also be that the first portion 201 is the hollow structure opening on one side, and the second portion 202 is a platy structure. The second portion 202 is covered on the opening side of the first portion 201, so that the box body 20 with accommodating space is formed. The first portion 201 and the second portion 202 can be sealed through a sealing element, wherein the sealing element can be a sealing ring, sealing glue, etc.

In the battery 100, one or a plurality of the battery cells 10 can be provided. If the plurality of battery cells 10 are provided, the plurality of battery cells 10 can be connected in series or in parallel or in mixed, wherein the mixed connection means that the plurality of battery cells 10 are both in series connection and in parallel connection. It can be that the plurality of battery cells 10 are first connected in series or in parallel or mixed to form a battery module, and the plurality of battery modules are then connected in series or in parallel or in mixed to form a whole, and are accommodated in the box body 20. It can also be that all the battery cells 10 are directly connected together in series or in parallel or in mixed, and then the whole consisted of all the battery cells 10 is accommodated in the box body 20.

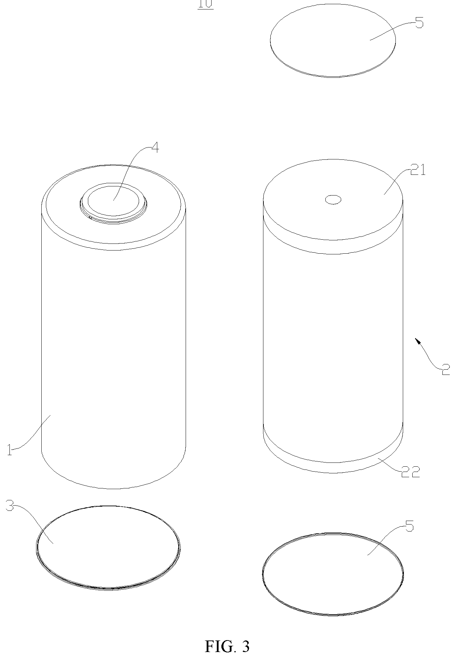

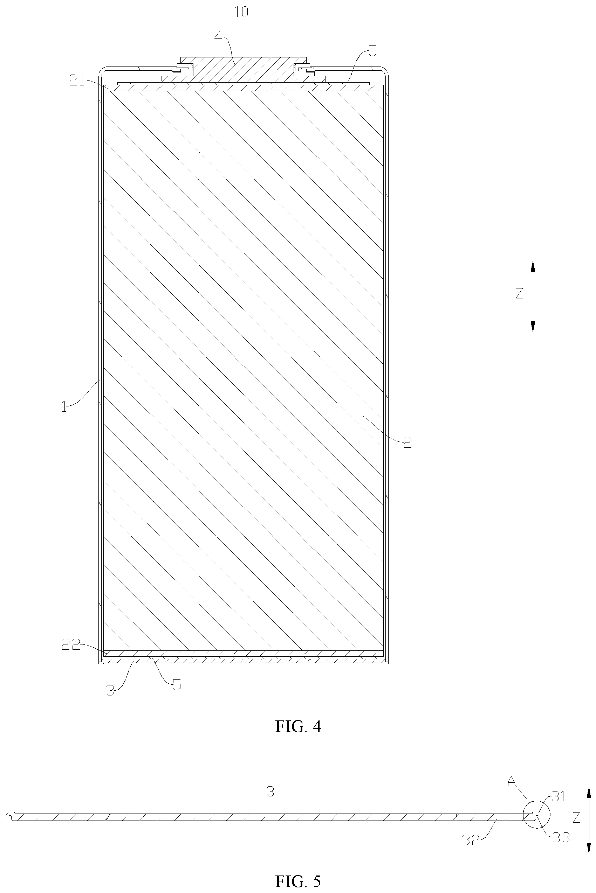

Referring to FIG. 3 and FIG. 4, FIG. 3 shows the explosion view of the battery cell 10 provided by some embodiments of the present disclosure and FIG. 4 shows the structure schematic diagram of the battery cell 10 shown in FIG. 3. The battery cell 10 can include a housing 1, electrode assembly 2 and end cover 3.

The housing 1 is a component to accommodate the electrode assembly 2. The housing 1 can be a hollow structure with an opening formed at one end. The housing 1 can be a hollow structure with openings formed at opposite ends. The housing 1 can be multiple shapes, e.g., cylindrical, rectangular, etc. The housing 1 can be made of multiple materials, such as copper, iron, aluminum, steel, aluminum alloy, etc.

The electrode assembly 2 within the housing 1 can be one or more.

The electrode assembly 2 is the component in the battery cell 10 where the electrochemical reaction occurs. The electrode assembly 2 can include a positive electrode plate, a negative electrode plate and an isolation diaphragm. The electrode assembly 2 can be a coiled structure formed by coiling the positive electrode plate, the isolation diaphragm and the negative electrode plate, or a laminated structure formed by layering the positive electrode plate, the isolation diaphragm and the negative electrode plate. The electrode assembly 2 includes a first tab 21 and a second tab 22, wherein one of the first tab 21 and the second tab 22 is the positive tab and the other is the negative tab. The positive tab can be a part of the positive electrode plate not coated with the positive electrode active substance layer, and the negative tab can be a part of the negative electrode plate not coated with the negative electrode active substance layer.

The end cover 3 is a component that closes the opening of the housing 1, so as to isolate the internal environment of the battery cell 10 from the external environment. The end cover 3 and the housing 1 together define a space for accommodating the electrode assembly 2, the electrolyte and other components. The shape of the end cover 3 can be adapted to the shape of the housing 1, for example, the housing 1 is a rectangular structure and the end cover 3 is a rectangular cover adapted to the housing 1. For example, as shown in FIG. 3 and FIG. 4, the housing 1 is a cylindrical structure and the end cover 3 is a circular end cover adapted to the housing 1. The end cover 3 can be made of multiple materials, such as copper, iron, aluminum, steel, aluminum alloy, etc. The material of the end cover 3 can be the same as or different from the material of the housing 1.

In the battery cell 10, the end cover 3 can be provided with one or two. For example, the housing 1 is a hollow structure with openings formed at opposite ends. Two end covers 3 can be correspondingly provided, and the two end covers 3 closes two openings of the housing 1 respectively. For example, as in FIG. 3 and FIG. 4, the housing 1 is a hollow structure with an opening at one end. One end covers 3 can be correspondingly provided, and the end cover 3 closes one opening of the housing 1.

The battery cell 10 can also include electrode terminal 4, wherein the electrode terminal 4 is configured to electrically connect to the electrode assembly 2 to output electrical energy of the battery cell 10. The electrode terminal 4 can be mounted on the housing 1 or the end cover 3. As shown in FIG. 3 and FIG. 4, in case that the housing 1 is the hollow structure with an opening at one end, the electrode terminal 4 is arranged in a wall portion of the housing 1 opposite to the end cover 3. The electrode terminal 4 is electrically connected to the first tab 21 of the electrode assembly 2, and the end cover 3 is electrically connected to the second tab 22 of the electrode assembly 2.

Of course, the electrode terminal 4 can be connected directly or indirectly to the first tab 21, and the end cover 3 can be connected directly or indirectly to the second tab 22. Exemplarily, the electrode terminal 4 is indirectly connected to the first tab 21 by a current collecting member 5, and the end cover 3 is indirectly connected to the second tab 22 by the other current collecting member 5. The current collecting member 5 is a metal conductor, such as copper, iron, aluminum, steel, aluminum alloy, etc. The current collecting member 5 can be disciform.

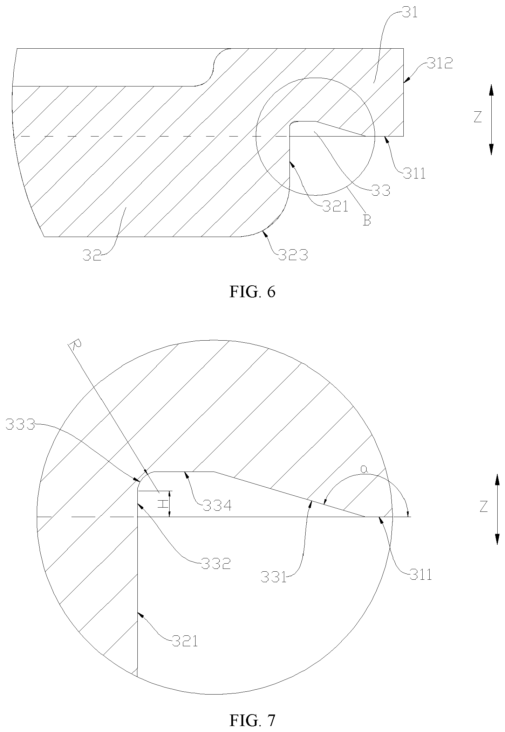

Referring to FIG. 5 and FIG. 6, FIG. 5 shows the structure schematic diagram of the end cover 3 shown in FIG. 4; FIG. 6 shows the partially enlarged diagram at A of the end cover 3 shown in FIG. 5. The embodiment of the present disclosure provides an end cover 3, which is configured to close the opening of the housing 1 of the battery cell 10, wherein the end cover 3 includes an abutting portion 31 and a first convex portion 32. The abutting portion 31 includes an abutting surface 311, and the abutting surface 311 is configured to abut against one end of the housing 1 provided with the opening. The first convex portion 32 is connected to the abutting portion 31 and protrudes out of the abutting surface 311, and the first convex portion 32 is configured to extend into the housing 1. The groove 33 is arranged on the abutting surface 311, wherein the groove 33 is arranged around the first convex portion 32, and the external peripheral surface 321 of the first convex portion 32 is connected to the abutting surface 311 through the groove wall surface of the groove 33.

The abutting portion 31 is a part of the end cover 3 for abutting the housing 1 and the external side surface of the first convex portion 32 is surrounded by the abutting portion 31, and the abutting portion 31 can be an edge part of the end cover 3.

The first convex portion 32 is a part of the end cover 3 for extending into the interior of the housing 1 and the first convex portion 32 can be coordinated with the housing 1, i.e., the external peripheral surface 321 of the first convex portion 32 is in contact with the inner peripheral surface of the housing 1. In case that the end cover 3 is the circular end cover, along the radial direction of the end cover 3, it is possible that a part of the end cover 3 located inside the region of the abutting portion 31 is the first convex portion 32, or it is possible that the entire end cover 3 located inside the region of the abutting portion 31 is the first convex portion 32. In case that the entire end cover 3 located inside the region of the abutting portion 31 is the first convex portion 32, the first convex portion 32 is a circular region located at the middle position of the end cover 3, and the abutting portion 31 is an annular region located at the edge position of the end cover 3.

The first convex portion 32 is surrounded by the groove 33 at the external side, and the groove 33 is surrounded by the abutting surface 311 at the external side. The groove 33 can be molded by stamping. The groove 33 can be an annular groove surrounding the external side of the first convex portion 32, and the interior space of the groove 33 is defined by the groove wall surface of groove 33. The abutting surface 311 is the inner surface of the abutting portion 31, which is configured to abut against the end of the housing 1 provided with the opening, and the abutting surface 311 can be an annular plane surrounding the external side of the groove 33.

For the general end cover 3, the abutting surface 311 of the abutting portion 31 and the external peripheral surface 321 of the first convex portion 32 are transitioned through rounded corner, and the rounded corner will interfere with the housing 1, so that the abutting surface 311 cannot abut against the end of the housing 1 provided with the opening, and so that the firmness between the end cover 3 and the housing 1 is poor after connected. For example, the connection strength is poor after the end cover 3 is welded to the housing 1, so that the end cover 3 is easy to be separated from the housing 1.

In the embodiment of the present disclosure, the groove 33 is arranged on the abutting surface 311 and the external peripheral surface 321 of the first convex portion 32 is connected to the abutting surface 311 through the groove wall surface of the groove 33, which eliminates the rounded corner between the external peripheral surface 321 of first convex portion 32 and the abutting surface 311, and reduces the risk that the rounded corner is formed at the connection position of the external peripheral surface 321 of first convex portion 32 and the abutting surface 311 to cause the interference between the end cover 3 and the housing 1, so that the abutting surface 311 can abut against one end of the housing 1 provided with the opening, thereby improving the firmness of the end cover 3 after connected to the housing 1.

Additionally, for the general end cover 3, after the rounded corner interferes with the housing 1, a gap will be formed between the abutting surface 311 of the abutting portion 31 and the end of the housing 1 provided with the opening. When the abutting portion 31 is welded to the end cover 3, the welding laser will be shot into the interior of the housing 1, which will cause damage to internal components of the battery cell 10 and affect the service life of the battery cell 10. In the present disclosure embodiment, the groove 33 is provided so that the abutting surface 311 can abut against the opening of the housing 1, which reduces the risk that the welding laser is shot into the interior of the housing 1.

In some embodiments, referring to FIG. 7, FIG. 7 shows the partially enlarged diagram of the end cover 3 at B shown in FIG. 6. The groove wall surface includes the first groove side surface 331, wherein the first groove side surface 331 is connected to the abutting surface 311, and the first groove side surface 331 is arranged with the abutting surface 311 at the obtuse angle.

The first groove side surface 331 is the groove side surface of the groove 33 connected to the abutting surface 311, wherein the first groove side surface 331 is provided at an angle, and the first convex portion 32 is surrounded by the first groove side surface 331 at the external side. In case that the groove 33 is the annular groove, the first groove side surface 331 can be a conical surface surrounding the external side surface of the first convex portion 32.

The first groove side surface 331 has an angle a with the abutting surface 311, wherein 90°<a<180°, and a can be 100°, 110°, 120°, 130°, 135°, 140°, 150°, 160°, 170°, etc., exemplarily, 135°<a<180°.

In the embodiment, the first groove side surface 331 is arranged at the obtuse angle with the abutting surface 311, which reduces the risk that the sharp corner exists at the connection position of the first groove side surface 331 and the abutting surface 311, so that the connection position is not too sharp.

Additionally, the end cover 3 can be formed from base materials by stamping. After stamping and molding the abutting portion 31, the abutting portion 31 can be deformed with the release of stress, so that the abutting surface 311 of the abutting portion 31 is uneven, as well as the perpendicularity between the abutting surface 311 and the external side surface 312 of the abutting portion 31 cannot meet the requirement.

In the embodiment, since the first groove side surface 331 is arranged at the obtuse angle to the abutting surface 311, the first groove side surface 331 is in an inclined state, which increases the amount of extruding material when stamping to mold the groove 33. The extrusion pressure on the first groove side surface 331 during molding can increase the perpendicularity between the abutting surface 311 and the external side surface 312 of the abutting portion 31 (shown in FIG. 6), and the abutting surface 311 can be more even, which increases the contact area of the abutting surface 311 and the housing 1, thereby facilitating the welding of the abutting portion 31 with the housing 1. When 135°<a<180°, the abutting surface 311 can be more even, so as to further improve the perpendicularity between the abutting surface 311 and the external side surface 312 of the abutting portion 31.

It is noted that in other embodiments, the first groove side surface 331 and the abutting surface 311 can also be arranged at other angles, such as right angle or acute angles.

In some embodiments, referring to FIG. 7, the groove side surface includes a second groove side surface 332, a first rounded surface 333 and a groove bottom surface 334, wherein the second groove side surface 332 is connected to the outer external peripheral surface 321, the groove bottom surface 334 is connected to the first groove side surface 331, and the first rounded surface 333 is connected to the second groove side surface 332 and the groove bottom surface 334.

The second groove side surface 332 is the groove side surface where the groove 33 is connected to the second groove side surface 332. The second groove side surface 332 and the external peripheral surface 321 can be coplanar, e.g., both are arranged on the same cylindrical surface. The second groove side surface 332 and the external peripheral surface 321 can also be provided at the obtuse angle, e.g., the external peripheral surface 321 is the cylindrical surface and the second groove side surface 332 is the conical surface. The junction of the second groove side surface 332 with the external peripheral surface 321 is in a plane where the abutting surface 311 is located. The position shown by the dashed line in FIG. 7 is the junction of the second groove side surface 332 with the external peripheral surface 321.

The groove bottom surface 334 can be the plane, and the groove bottom surface 334 can be arranged at the obtuse angle to the first groove side surface 331. The angle between the groove bottom surface 334 and the first groove side surface 331 can be equal or not equal to the angle between the abutting surface 311 and the first groove side surface 331. If it is equal, the groove bottom surface 334 is parallel to the abutting surface 311. If it is not equal, the groove bottom surface 334 is not parallel to the abutting surface 311. The first rounded surface 333 is a chamfered surface connecting the second groove side surface 332 and the groove bottom surface 334, and both the second groove side surface 332 and the groove bottom surface 334 can be tangent to the first rounded surface 333.

The first rounded surface 333 can realize a circular transition between the second groove side surface 332 and the groove bottom surface 334, which is less likely to cause a stress concentration, and improves the strength at the connection area of the second groove side surface 332 and the groove bottom surface 334 in the end cover 3.

Additionally, if the abutting surface 311 is too wide or the area of the abutting surface 311 is larger, it is more difficult to ensure the flatness of the abutting surface 311 and molding is more difficult. In the embodiment, since the first groove side surface 331 connected to the groove bottom surface 334 is arranged with the abutting surface 311 at the obtuse angle, the groove 33 of this structure has a larger groove width, so as to reduce the width of the abutting surface 311, which is more easily to ensure the flatness of the abutting surface 311, so that the abutting surface 311 can be in better contact with the housing 1.

In some embodiments, referring to FIG. 7, the groove bottom surface 334 is parallel to the abutting surface 311. Exemplarily, the groove bottom surface 334 is the annular plane surrounding the external side of the first convex portion 32.

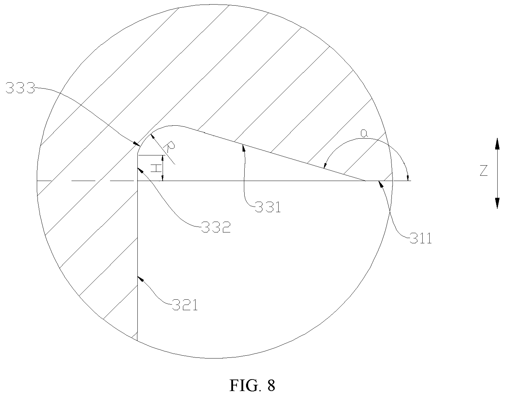

In other embodiments, referring to FIG. 8, FIG. 8 shows the partially enlarged diagram of the end cover 3 provided by other embodiments of the present disclosure. The groove wall surface includes a second groove side surface 332 and a first rounded surface 333, wherein the second groove side surface 332 is connected to the external peripheral surface 321, and the first rounded surface 333 is connected to the first groove side surface 331 and the second groove side surface 332.

Both of the first groove side surface 331 and the second groove side surface 332 can be tangent to the first rounded surface 333.

The first rounded surface 333 can realize a smooth transition between the first groove side surface 331 and the second groove side surface 332, which is less likely to cause a stress concentration, and improves the strength at the connection area of the first groove side surface 331 and the second groove side surface 332 in the end cover 3.

In some embodiments, referring to FIG. 7 and FIG. 8, the first rounded surface 333 has a radius R, satisfying: R≥0.2mm.

R can be 0.2mm, 0.3mm, 0.4mm, 0.5mm, etc.

If R is less than 0.2 mm, the first rounded surface 333 is more difficult to be molded and the risk of stress concentration will be existed. Therefore, when R ≥ 0.2 mm, it reduces the risk of stress concentration of the end cover 3, so that the difficulty of molding the first rounded surface 333 is reduced.

In some embodiments, referring to FIG. 7 and FIG. 8, along the direction perpendicular to the abutting surface 311, a distance from the position where the second groove side surface 332 is connected to the first rounded surface 333 to the abutting surface 311 is H, satisfying: H ≥ 0.05mm.

In FIG. 7 and FIG. 8, Z direction is perpendicular to the abutting surface 311.

In case that the first rounded surface 333 is tangent to the second groove side surface 332, the position where the second rounded surface 323 is tangent to the second groove side surface 332 is the position where the second groove side surface 332 is connected to the first rounded surface 333. In case that the second groove side surface 332 is the cylindrical surface extending along the Z direction, the distance H from the connection position of the second groove side surface 332 and the first rounded surface 333 to the abutting surface 311 is the height of the second groove side surface 332 in the Z direction.

H can be 0.05mm, 0.1mm, 0.2mm, 0.3mm, 0.4mm, 0.5mm, 0.6mm, etc. Further, H ≥ 0.2 mm.

When the end cover 3 is assembled with the housing 1, the surface of the housing 1 in contact with the abutting surface 311 can be uneven, which is still possible that the concave-convex structure of the end of the housing 1 provided with the opening can abut against the first rounded surface 333. Therefore, when H ≥ 0.05 mm, it reduces the risk of the first rounded surface 333 abutting against one end of the housing 1 provided with opening.

In some embodiments, referring to FIG. 7 and FIG. 8, the second groove side surface 332 is arranged on the same cylindrical surface with the outer external peripheral surface 321.

It can be understood that, the second groove side surface 332 and the external peripheral surface 321 are both cylindrical surfaces, the second groove side surface 332 and the external peripheral surface 321 are coaxially disposed, and the radius of the second groove side surface 332 is equal to the radius of the external peripheral surface 321.

In the embodiment, the second groove side surface 332 is arranged on the same cylindrical surface as the external peripheral surface 321, so that the groove 33 has a simpler structure, which reduces the difficulty of molding the groove 33.

In some embodiments, referring to FIG. 7 and FIG. 8, the external peripheral surface 321 extends along the direction perpendicular to the abutting surface 311.

In case that the outer external peripheral surface 321 is the cylindrical surface, the extension direction of the outer external peripheral surface 321 is the axial direction of the outer external peripheral surface 321, and the axial direction of the outer external peripheral surface 321 is perpendicular to the abutting surface 311.

When the outer external peripheral surface 321 of the first convex portion 32 is coordinated with the inner peripheral surface of the housing 1, the contact area between the abutting surface 311 and the housing 1 can be increased.

In some embodiments, referring to FIG. 6, the first convex portion 32 is provided with an end surface 322 departing from the abutting surface 311, and the end surface 322 is connected to the outer external peripheral surface 321 through the second rounded surface 323.

The second rounded surface 323 is a chamfered surface for connecting the end surface 322 and the external peripheral surface 321. Both the end cover 3 and the external peripheral surface 321 can be tangent to the second rounded surface 323.

In the embodiment, the second rounded surface 323 is provided. On the one hand, it avoids a sharp corner from being formed at the connection position of the end surface 322 of first convex portion 32 and the external peripheral surface 321. On the other hand, it facilitates the first convex portion 32 to enter the housing 1 when the end cover 3 is assembled with the housing 1.

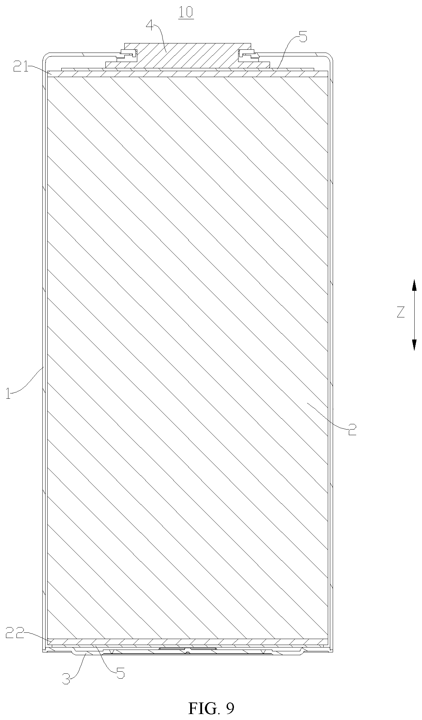

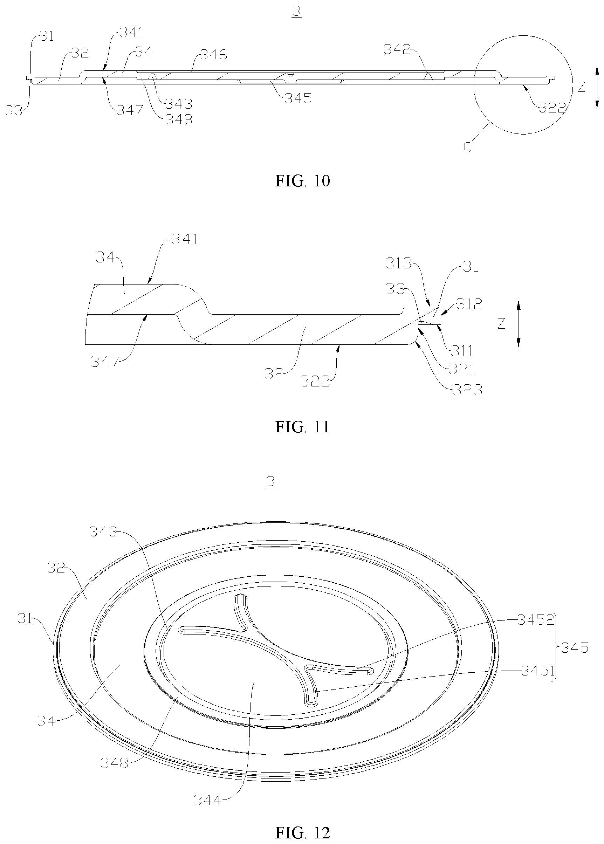

In some embodiments, referring to FIG. 9 and FIG 10, FIG. 9 shows the structure schematic diagram of the battery cell 10 provided by other embodiments of the present disclosure; FIG. 10 shows the structure schematic diagram of the end cover 3 shown in FIG. 9. The end cover 3 further includes a body portion 34, and the first convex portion 32 is arranged around the external side surface of the body portion 34, In a thickness direction of the body portion 34, the first convex portion 32 protrudes from the body portion 34 along a direction facing interior of the housing 1.

The body portion 34 is the main part of the end cover 3, and the body portion 34 is arranged inside the first convex portion 32. In case that the end cover 3 is a circular structure, the body portion 34 can be a circular region located inside the first convex portion 32. Along the radial direction of the end cover 3, the first convex portion 32 is further away from the center axis of the end cover 3 than the body portion 34.

The first convex portion 32 can be configured as a part that the end cover 3 is electrical connected to the electrode assembly 2. For example, in the embodiment that the second tab 22 of the electrode assembly 2 is directly connected to the end cover 3, the first convex portion 32 of the end cover 3 can abut against the second tab 22 to realize a large area of current flow between the end cover 3 and the second tab 22. For example, in the embodiment that the second tab 22 of the electrode assembly 2 is indirectly connected to the end cover 3 through the current collecting member 5, the first convex portion 32 of the end cover 3 can abut against the current collecting member 5 to realize a large area of current flow between the end cover 3 and the current collecting member 5.

In FIG. 9 and FIG. 10, the Z direction is the thickness direction of the body portion 34. It can be understood that the thickness direction of the body portion 34 is corresponding to the direction perpendicular to the abutting surface 311.

In the embodiment, since the first convex portion 32 is arranged around the external side of the body portion 34 and the first convex portion 32 protrudes from the body portion 34 along a direction facing the interior of the housing 1, the first convex portion 32 can play a role of reinforcement for the body portion 34, thereby improving the deformation resistance of the body portion 34.

Additionally, when the end cover 3 is electrically connected to the electrode assembly 2, the first convex portion 32 abuts against the current collecting member 5 or the tab of the electrode assembly 2, so that the current flow area between the end cover 3 and the current collecting member 5 or the tab can be ensured.

In some embodiments, referring to FIG. 11, FIG. 11 shows the partially enlarged diagram at C of the end cover 3 shown in FIG. 10. Along the thickness direction of the body portion 34, the first external surface 341 departing from the housing 1 is arranged on the body portion 34, wherein the first external surface 341 is the surface of the end cover 3 furthest away from the housing 1. The second external surface 313 disposed oppositely to the abutting surface 311 is arranged on the abutting portion 31, and the first external surface 341 is further away from the abutting surface 311 than the second external surface 313.

The first external surface 341 can be the plane. In case that the end cover 3 is the circular structure, the first external surface 341 can be a circular plane or an annular plane located at the center region of the end cover 3. The first external surface 341 can be configured as a supporting surface of the battery cell 10.

The second external surface 313 is the surface of the abutting portion 31 opposite the abutting surface 311, and the second external surface 313 can be the plane. The second external surface 313 is connected to the abutting surface 311 through the external side surface 312 of the abutting portion 31. The first external surface 341 is further away from the abutting surface 311 than the second external surface 313, so that a certain distance is existed between the first external surface 341 and the second external surface 313 along the thickness direction of the body portion 34. When the abutting surface 311 abuts against the end of the housing 1 provided with the opening, along the thickness direction of the body portion 34, the abutting portion 31 is overall closer to the housing 1 than the first external surface 341.

The first external surface 341 can be configured as the supporting surface of the battery cell 10. Because the first external surface 341 is further away from the abutting surface 311 than the second external surface 313, even if the abutting portion 31 is welded to the housing 1 to form the welding slag protruding from the abutting surface, the welding slag is not easy to protrude from the first external surface 341. The height difference between the first external surface 341 and the second external surface 313 provides the welding slag with an avoidance space, which reduces the effect of the welding slag on the first external surface 341, so that the first external surface 341 can be in contact with external components with the large area when the battery cell 10 is placed on the external component, thereby improving the stability of the battery cell 10. The external component can be a bottom wall or a thermal management component of the box body 20 of the battery 100, etc. The thermal management component is a component to manage the temperature of the battery cell 10, and the thermal management component can be a water-cooling plate.

In some embodiments, referring to FIG. 10, a weak portion 342 is arranged on the body portion 34, wherein the weak portion 342 is configured to be destroyed when the battery cell 10 relieves pressure, so as to relieve pressure within the battery cell 10.

The weak portion 342 is a weaker part of the body portion 34, and the weak portion 342 has smaller strength than other regions of the body portion 34 and is easier to be destroyed. Therefore, a localized region of the body portion 34 can be weakened to form the weak portion 342. For example, a thickness of the localized region of the body portion 34 can be reduced to correspondingly form the weak portion 342. For example, the localized region of the body portion 34 is annealed to correspondingly form the weak portion 342. A plurality of ways are provided for damaging the weak portion 342, such as rupture, detachment, etc.

When the pressure inside the battery cell 10 reaches the burst pressure, the weak portion 342 will be damaged under the action of emissions (gas, electrolyte, etc.) inside the battery cell 10, so as to realize the pressure relief of the battery cell 10.

The end cover 3 is provided with a pressure relief function by the arrangement of the weak portion 342, so that the end cover 3 can be configured as a pressure relief component of the battery cell 10 to improve the safety of the battery cell 10.

In some embodiments, referring to FIG. 10, a notch groove 343 is arranged on the body portion 34, and the weak portion 342 is arranged at a position where the body portion 34 is corresponding to the notch groove 343.

The notch groove 343 can be a groove extending along a straight trajectory or a groove extending along a curved trajectory. If the notch groove 343 is the groove extending along the curved trajectory, the notch groove 343 can be a groove extending along the closed trajectory or a groove extending along the unclosed trajectory. Of course, the notch groove 343 can also be a cylindrical groove or a rectangular groove, etc.

The weak portion 342 is correspondingly formed by arranging the notch groove 343 on the body portion 34, so that the thickness of the weak portion 342 is thinner than the thickness of the other areas, which is easier to be destroyed. The weak portion 342 is molded in a simple manner.

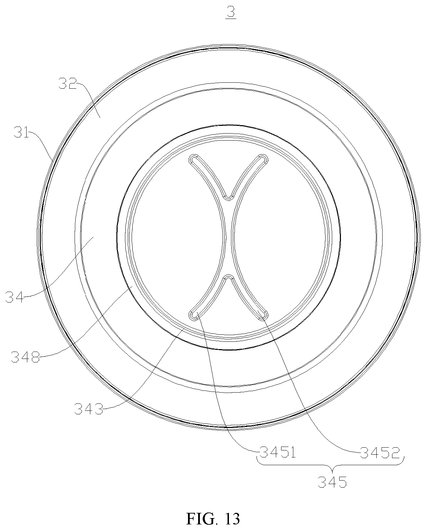

In some embodiments, referring to FIG. 12 and FIG. 13, FIG. 12 shows the axonometric diagram of the end cover 3 shown in FIG. 10; FIG. 13 shows the top diagram of the end cover 3 shown in FIG. 12. The pressure relief region 344 bounded by the notch groove 343 is arranged on the body portion 34, and the reinforcement 345 is arranged on the pressure relief region 344.

The pressure relief region 344 is a part of the body portion 34 that opens with the notch groove 343 as a boundary when the battery cell 10 relieves pressure. When the pressure relief region 344 is opened, a discharge port will be formed at a position where the body portion 34 is corresponding to the pressure relief region 344, so that the emission in the battery cell 10 will be discharged through the discharge port, so as to release the pressure inside the battery cell 10. The pressure relief region 344 can be opened in an outwardly flipped or detached manner.

The reinforcement 345 can increase the stiffness of the pressure relief region 344 and improve the deformation resistance of the pressure relief region 344. The reinforcement 345 can be multiple shapes, such as rectilinear shape, arc shape, annular shape, U shape, circular shape, rectangular shape, etc. The reinforcement 345 can be integrally molded with the body portion 34, e.g., the reinforcement 345 is formed on the body portion 34 by stamping, so that the reinforcement 345 is integrally molded with the body portion 34. The reinforcement 345 and the body portion 34 can also be separately arranged and then connected, e.g., welded. When the reinforcement 345 is formed on the body portion 34 by stamping, a stamping groove will be formed at a position where the reinforcement 345 is opposite to the body portion 34, and the stamping groove will be of the same shape as the shape of the reinforcement 345.

When relieving pressure, the pressure relief region 344 can be opened with the boundary of the notch groove 343, so that the end cover has a larger pressure relief area. The reinforcement 345 is arranged on the pressure relief region 344, so that the reinforcement 345 can reinforce the pressure relief region 344 and improve the deformation resistance of the pressure relief region 344. Therefore, when the internal pressure of the battery cell 10 changes, the pressure relief region 344 is not easy to be deformed, which reduces the risk that the pressure relief region 344 is opened in the normal use of the battery cell 10.

In some embodiments, referring to FIG. 12 and FIG. 13, the reinforcement 345 includes the first reinforcing portion 3451 and the second reinforcing portion 3452, wherein the first reinforcing portion 3451 and the second reinforcing portion 3452 both are in arc, and the opening of the first reinforcing portion 3451 is arranged facing away from the opening of the second reinforcing portion 3452.

Both the first reinforcing portion 3451 and the second reinforcing portion 3452 protrude from the pressure relief region 344. The first reinforcing portion 3451 is provided with two ends in the extension direction, and an opening of the first reinforcing portion 3451 is formed at the position of a line (straight line) connecting two ends of the first reinforcing portion 3451. The second reinforcing portion 3452 is provided with two ends in the extension direction, and an opening of the second reinforcing portion 3452 is formed at the position of a line (straight line) connecting two ends of the second reinforcing portion 3452.

In some embodiments, as shown in FIG. 12 and FIG. 13, the first reinforcing portion 3451 can be directly connected to the second reinforcing portion 3452. In other embodiments, the first reinforcing portion 3451 and the second reinforcing portion 3452 can also be arranged at intervals, e.g., the first reinforcing portion 3451 and the second reinforcing portion 3452 are arranged at intervals along a radial direction of the end cover 3.

The first reinforcing portion 3451 and the second reinforcing portion 3452 both are in arc, and the opening of the first reinforcing portion 3451 is arranged facing away from the opening of the second reinforcing portion 3452. The reinforcement 345 of this structure has a larger control range, which can increase the reinforcing range for the pressure relief region 344. The first reinforcing portion 3451 and the second reinforcing portion 3452 of arc have better deformation resistance, which can reinforce the pressure relief region 344 better, and further improve the deformation resistance and fatigue resistance of the pressure relief region 344.

In some embodiments, the notch groove 343 is a groove extending along a closed trajectory.

The closed trajectory can be multiple shapes, e.g., circular trajectory, rectangular trajectory, elliptical trajectory, etc. In the embodiment, the pressure relief region 344 is a closed area on the body portion 34 defined by the notch groove 343.

When the battery cell 10 relieves the pressure, the part of the body portion 34 in the region defined by the notch groove 343 can be opened in a manner that is detached toward the outside of the battery cell 10, so that the battery cell 10 has a larger pressure relief area, thereby improving the pressure relief efficiency.

In some embodiments, the notch groove 343 is a circular groove.

It can be understood that the notch groove 343 is a groove that extends along the circular trajectory. In the embodiment, the pressure relief region 344 is a circular area on the body portion 34 defined by the notch groove 343. The circular groove has a simple structure and is easy to be molded.

In other embodiments, the notch groove 343 can also be a groove extending along the unclosed trajectory, so as to define the pressure relief region 344, e.g., curved groove, U-shaped groove, etc.

In some embodiments, referring to FIG. 10, along the thickness direction of the body portion 34, the first external surface 341 departing from the inner side of the housing 1 is arranged on the body portion 34, wherein the first external surface 341 is the surface of the end cover 3 furthest away from the housing 1. The concave portion 346 is arranged on the first external surface 341, and the projection of bottom surface of the concave portion 346 covers the weak portion 342.

The concave portion 346 can be a cylindrical groove or a rectangular groove arranged on the first external surface 341, etc. The bottom surface of the concave portion 346 can be the plane. It can be understood that the projection of the weak portion 342 along the thickness direction of the body portion 34 is located on the bottom surface of the concave portion 346.

Through the arrangement of concave portion 346, a certain distance exists between the weak portion 342 and the first external surface 341. When the first external surface 341 is in contact with the external components, it can reduce the influence of the external components on the weak portion 342, so that the weak portion 342 can be destroyed smoothly when the internal pressure of the battery cell 10 reaches the normal burst pressure, thereby reducing the risk that the weak portion 342 causes an increase of the burst pressure of battery cell 10 because of the inhibitory effect from external components.

In some embodiments, referring to FIG. 10, along the thickness direction of the body portion 34, a first inner surface 347 opposite the first external surface 341 is arranged on the body portion 34, and a second convex portion 348 is arranged at a position where the first inner surface 347 is corresponding to the concave portion 346.

The first inner surface 347 is a surface of the body portion 34 opposite to the first external surface 341 along the thickness direction, and a distance between the first inner surface 347 and the first external surface 341 is the thickness of the body portion 34.

The shape of the second convex portion 348 can be the same as that of the concave portion 346. In case that the shape of the concave portion 346 is a cylindrical groove, the second convex portion 348 can be a cylindrical convex plate protruding from the first inner surface 347. The concave portion 346 can be molded by stamping. When the concave portion 346 is stamped and molded on the first external surface 341, a second convex portion 348 protruding from the first inner surface 347 is formed correspondingly.

The reinforcement 345 can protrude from a surface of the convex portion departing from the first inner surface 347, or protrude from a bottom surface of the concave portion 346. In the embodiment shown in FIG. 10, the reinforcement 345 protrudes from the bottom surface of the concave portion 346, and the reinforcement 345 does not extend beyond the end surface 322 of the first convex portion 32 along the thickness direction of the body portion 34.

In the embodiments that the notch groove 343 is arranged on the body portion 34, the notch groove 343 can be arranged on the bottom surface of the concave portion 346 and/or the surface of the convex portion departing from the first inner surface 347.

In the embodiment, the arrangement of the second convex portion 348 can increase the strength of the region of the concave portion 346 that is arranged on the body portion 34, so as to enhance the damage resistance of the region of the concave portion 346 that is arranged on the body portion 34.

The embodiments of the present disclosure provide a battery cell 10, which includes the housing 1 and the end cover 3 provided in any of the embodiments above. The housing 1 is provided with the opening, and the first convex portion 32 extends into the housing 1. The abutting surface 311 abuts against one end of the housing 1 provided with the opening. The end cover 3 is configured to close the opening.

Exemplarily, the housing 1 is a cylindrical housing and the end cover 3 is a circular end cover.

In some embodiments, the abutting portion 31 is welded to the housing 1.

The welded region formed by welded the abutting portion 31 to the housing 1 is arranged around the abutting portion 31 to realize a sealed connection between the abutting portion 31 and the housing 1.

In the embodiment, the abutting portion 31 is welded to the housing 1, so that the way of fixed connection between the end cover 3 and the housing 1 is simple, which can ensure the firmness and sealing property of the end cover 3 and the housing 1 after connected.

The embodiments of the present disclosure provide a battery 100, which includes the battery cell 10 provided in any of the embodiments above.

The embodiments of the present disclosure provide an electrical device, which includes the battery 100 provided in any of the embodiments above.

Additionally, the embodiments of the present disclosure provide a circular end cover, which is configured to close the opening of the housing 1 of the battery cell 10, wherein the end cover 3 includes the abutting portion 31, the first convex portion 32 and the body portion 34. The abutting portion 31 includes the abutting surface 311, and the abutting surface 311 is configured to abut against one end of the housing 1 provided with the opening. The first convex portion 32 is connected to the abutting portion 31 and protrudes out of the abutting surface 311, and the first convex portion 32 is configured to extend into the housing 1. The groove 33 is arranged on the abutting surface 311, wherein the groove 33 is arranged around the first convex portion 32, and the external peripheral surface 321 of the first convex portion 32 is connected to the abutting surface 311 through the groove wall surface of the groove 33. The groove wall surface includes the first groove side surface 331, the second groove side surface 332, the groove bottom surface 334 and the first rounded surface 333. The first groove side surface 331 is connected to the abutting surface 311, and the first groove side surface 331 is arranged with the abutting surface 311 at the obtuse angle. The second groove side surface 332 is connected to the external peripheral surface 321, and the second groove side surface 332 is arranged with the external peripheral surface 321 on the same cylindrical surface. The groove bottom surface 334 is parallel to the abutting surface 311, and the groove bottom surface 334 is connected to the first groove side surface 331. The first rounded surface 333 is connected to the second groove side surface 332 and the groove bottom surface 334, wherein the radius of the first rounded surface 333 is R, R ≥ 0.2 mm. Along the direction perpendicular to the abutting surface 311, the distance from the position where the second groove side surface 332 is connected to the first rounded surface 333 to the abutting surface 311 is H, wherein H≥0.05mm The first convex portion 32 is arranged around the external side surface of the body portion 34, and along the direction perpendicular to the abutting surface 311, the first convex portion 32 protrudes from the body portion 34 along the direction facing interior of the housing 1.

The notch groove 343 is arranged on the body portion 34, and the weak portion 342 is arranged at the position where the body portion 34 is corresponding to the notch groove 343. The notch groove 343 is the annular groove and defines the pressure relief region 344, wherein the reinforcement 345 is arranged on the pressure relief region 344. The reinforcement 345 includes the first reinforcing portion 3451 and the second reinforcing portion 3452, wherein the first reinforcing portion 3451 and the second reinforcing portion 3452 both are in arc, and the opening of the first reinforcing portion 3451 is arranged facing away from the opening of the second reinforcing portion 3452. Along the direction perpendicular to the abutting surface 311, the first external surface 341 departing from the interior of the housing 1 is arranged on the body portion 34, wherein the first external surface 341 is the surface of the end cover 3 furthest away from the housing 1. The concave portion 346 is arranged on the first external surface 341, and the projection of bottom surface of the concave portion 346 covers the weak portion 342. The first inner surface 347 opposite the first external surface 341 is arranged on the body portion 34, and the second convex portion 348 is arranged at the position where the first inner surface 347 is corresponding to the concave portion 346.

It is noted that, the embodiments and features in the embodiments of the present disclosure can be combined with each other without conflict.

The above embodiments are intended only to illustrate the technical solutions of the present disclosure, and are not intended to limit the present disclosure. For those skilled in the art, the present disclosure can be made of various changes and variations. Any modifications, equivalent substitutions, improvements, etc., made within the spirit and principles of the present disclosure shall be included in the scope of protection of the present disclosure.

## Claims

1. An end cover, configured to close an opening of a housing of a battery cell, wherein the end cover comprises:
an abutting portion, provided with an abutting surface, wherein the abutting surface is configured to abut against one end of the housing provided with the opening; and
a first convex portion, connected to the abutting portion and protruding out of the abutting surface, wherein the first convex portion is configured to extend into the housing, wherein
a groove is arranged on the abutting surface, the groove is arranged around the first convex portion, and an external peripheral surface of the first convex portion is connected to the abutting surface through a groove wall surface of the groove.

2. The end cover according to claim 1, wherein the groove wall surface comprises a first groove side surface, wherein the first groove side surface is connected to the abutting surface, and the first groove side surface is arranged with the abutting surface at an obtuse angle.

3. The end cover according to claim 2, wherein the groove wall surface comprises:
a second groove side surface, connected to the external peripheral surface; and
a first rounded surface, connected to the first groove side surface and the second groove side surface.

4. The end cover according to claim 2, wherein the groove side surface comprises:
a second groove side surface, connected to the external peripheral surface;
a groove bottom surface, connected to the first groove side surface; and
a first rounded surface, connected to the second groove side surface and the groove bottom surface.

5. The end cover according to claim 4, wherein the groove bottom surface is parallel to the abutting surface.

6. The end cover according to any one of claims 3-5, wherein the first rounded surface has a radius R, satisfying: R≥0.2mm.

7. The end cover according to any one of claims 3-6, wherein along a direction perpendicular to the abutting surface, a distance from a position where the second groove side surface is connected to the first rounded surface to the abutting surface is H, satisfying: H ≥ 0.05mm.

8. The end cover according to any one of claims 3-7, wherein the second groove side surface and the external peripheral surface are arranged on the same cylindrical surface.

9. The end cover according to any one of claims 1-8, wherein the external peripheral surface extends along a direction perpendicular to the abutting surface.

10. The end cover according to any one of claims 1-9, wherein an end surface departing from the abutting surface is arranged on the first convex portion, wherein the end surface is connected to the external peripheral surface through a second rounded surface.

11. The end cover according to any one of claims 1-10, wherein the end cover further comprises:
a body portion, wherein the first convex portion is arranged around an external side of the body portion, and in a thickness direction of the body portion, the first convex portion protrudes from the body portion along a direction facing an inside of the housing.

12. The end cover according to claim 11, wherein along the thickness direction of the body portion, a first external surface departing from the housing is arranged on the body portion, wherein the first external surface is a surface of the end cover furthest away from the housing; and a second external surface disposed oppositely to the abutting surface is arranged on the abutting portion, and the first external surface is further away from the abutting surface than the second external surface.

13. The end cover according to claim 11 or 12, wherein a weak portion is arranged on the body portion, wherein the weak portion is configured to be destroyed when the battery cell relieves a pressure, so as to relieve the pressure in the battery cell.

14. The end cover according to claim 13, wherein a notch groove is arranged on the body portion, wherein the weak portion is arranged at a position where the body portion is corresponding to the notch groove.

15. The end cover according to claim 14, wherein a pressure relief region bounded by the notch groove is arranged on the body portion, wherein a reinforcement is arranged on the pressure relief region.

16. The end cover according to claim 15, wherein the reinforcement comprises a first reinforcing portion and a second reinforcing portion, wherein the first reinforcing portion and the second reinforcing portion both are in arc, and an opening of the first reinforcing portion is arranged facing away from an opening of the second reinforcing portion.

17. The end cover according to any one of claims 14-16, wherein the notch groove is a groove extending along a closed trajectory.

18. The end cover according to any one of claims 14-17, wherein the notch groove is a circular groove.

19. The end cover according to any one of claims 13-18, wherein along the thickness direction of the body portion, a first external surface departing from an inside of the housing is arranged on the body portion, wherein the first external surface is a surface of the end cover furthest away from the housing; and a concave portion is arranged on the first external surface, wherein a projection of a bottom surface of the concave portion covers the weak portion.

20. The end cover according to claim 19, wherein along the thickness direction of the body portion, a first inner surface opposite to the first external surface is arranged on the body portion, and a second convex portion is arranged at a position where the first inner surface is corresponding to the concave portion.

21. A battery cell, comprising:
a housing, provided with an opening; and
the end cover according to any one of claims 1-20, wherein the first convex portion extends into the housing, the abutting surface abuts against one end of the housing provided with the opening, and the end cover closes the opening.

22. The battery cell according to claim 21, wherein the abutting portion is welded to the housing.

23. A battery, comprising the battery cell according to claim 21 or 22.

24. An electrical device, comprising the battery according to claim 23.
